# DEMANDE DE BREVET EUROPEEN

(11) **EP 1 102 156 A1**
(43) Date de publication de la demande: **23.05.2001**
(21) Numéro de dépôt: 00403171.2
(22) Date de dépôt: 14.11.2000
(51) Int. Cl.: G06F 1/00

(54) **Procédé et système de gestion d'accès à des informations**

(30) Priorité: 16.11.1999 FR 9914372
(71) Demandeur: FRANCE TELECOM, 75015 Paris (FR)
(72) Inventeur: Lambin, Hubert, 25000 Besancon (FR)
(74) Mandataire: Habasque, Etienne Joel Jean-François

(57) **Abrégé**

Dans ce procédé de gestion d'accès à des informations contenues dans au moins une base de données (10), par des utilisateurs appartenant à une liste contenue dans une base d'utilisateurs, on établit une hiérarchie des utilisateurs et l'on affecte à chacun d'eux une liste de documents ou une liste d'adresses de documents de la base de données qui leur sont accessibles.

## Description

La présente invention se rapporte à un procédé de gestion d'accès à des informations contenues dans une ou plusieurs bases de données.

Elle se rapporte également à un système de gestion d'accès pour la mise en oeuvre d'un tel procédé.

Une application particulièrement intéressante d'un tel procédé et d'un tel système concerne la gestion d'accès à des informations au moyen d'un réseau informatique local d'une entreprise, par exemple un réseau informatique de type "Intranet".

Classiquement, dans un tel réseau informatique, l'accès à des documents s'effectue en interrogeant une base de données dans laquelle sont stockés les documents.

Généralement, le contenu de cette base de données constitue un ensemble inorganisé de sorte que pour accéder à un document, il revient à l'utilisateur de réaliser les recherches en formulant une requête appropriée et en triant les documents fournis en réponse à la requête.

Par ailleurs, la gestion du contenu de la base de données s'effectue au moyen d'applications logicielles indépendantes.

Le but de l'invention est de fournir un procédé et un système de gestion d'accès à des informations palliant les inconvénients de l'état de la technique et dans lequel l'accès aux informations est simplifié.

Elle a donc pour objet un procédé de gestion d'accès à des informations contenues dans au moins une base de données par des utilisateurs appartenant à une liste contenue dans une base d'utilisateurs, caractérisé en ce que l'on établit une hiérarchie des utilisateurs et l'on affecte à chacun d'entre eux une liste de documents ou une liste d'adresses de documents de la base de données qui leur sont accessibles.

Ainsi, les documents accessibles à partir de la base de données constituent un ensemble structuré et organisé.

Ce procédé de gestion d'accès peut également comporter une ou plusieurs des caractéristiques suivantes, prises isolément ou selon toutes les combinaisons techniquement possibles :
- l'on attribue en outre à chaque utilisateur de la hiérarchie un niveau d'accès au document ;
- à une partie au moins des documents ou des adresses de documents affectés aux utilisateurs, on associe des liens pointant vers une liste secondaire d'au moins un document ;
- à une partie au moins des documents ou des adresses de documents affectés aux utilisateurs, on associe une liste de documents ou d'adresses de documents qui y sont cités ;
- en réponse à une requête d'un utilisateur, on procède à une comparaison entre l'identité de l'utilisateur et celle des utilisateurs de la base d'utilisateurs et, en cas de coïncidence entre l'identité de l'utilisateur qui a formulé la requête et celle d'un utilisateur de la base, on présente à cet utilisateur la liste des documents ou des adresses de documents qui lui sont accessibles,
- l'on associe à chaque document un indicateur représentant la nature d'une action préalablement réalisée sur le document.

L'invention a également pour objet un système de gestion d'accès à des informations contenues dans au moins une base de données, par des utilisateurs appartenant à une liste contenue dans une base d'utilisateurs, caractérisé en ce qu'il comporte une unité centrale de gestion d'accès adaptée pour établir une hiérarchie des utilisateurs et pour affecter, à chaque utilisateur, une liste de documents ou une liste d'adresses de documents de la base de données qui leurs sont accessibles, et un ensemble de postes de consultation utilisable par les utilisateurs pour accéder aux documents qui leur sont accessibles.

D'autres caractéristiques et avantages ressortiront de la description suivante, donnée uniquement à titre d'exemple, et faite en référence aux dessins annexés sur lesquels :
- La figure 1 représente l'architecture générale d'un système de gestion d'accès à des informations conforme à l'invention ;
- La figure 2 illustre le principe utilisé pour organiser le contenu des bases de données ;
- Les figures 3 et 4 sont des copies d'écran de l'unité centrale de gestion montrant les phases d'établissement de la hiérarchie des utilisateurs et d'affectation à chaque utilisateur de la liste de documents qui leurs sont accessibles ; et
- la figure 5 est une copie d'écran montrant le résultat d'une interrogation.

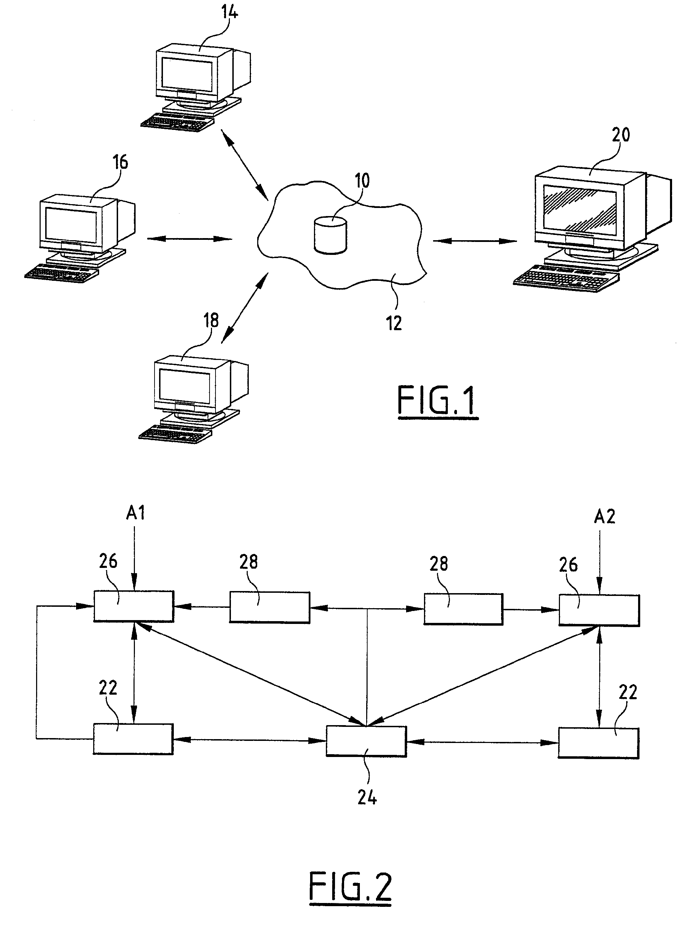

Sur la figure 1, on a représenté, de façon schématisée, la structure générale d'un système de gestion d'accès à des informations contenues dans une ou plusieurs bases de données 10.

Dans l'exemple de réalisation envisagé, l'accès à ces informations s'effectue par l'intermédiaire d'un réseau informatique 12 auquel sont raccordés un ensemble de postes de consultation 14, 16 et 18, constitués par des micro-ordinateurs de type classique, ces postes étant accessibles par des utilisateurs pour consulter le contenu de la base de données 10.

Dans la suite de la description, on considérera que le réseau informatique 12 et les postes utilisateurs 14, 16 et 18 constituent, conjointement, un réseau informatique local d'une entreprise, ou réseau " Intranet ". Un tel réseau est doté d'un centre serveur (non représenté) autorisant l'accès à la base de données 10.

On voit par ailleurs sur la figure 1 qu'une unité centrale de gestion, désignée par la référence numérique générale 20 est raccordée au réseau 12 pour assurer la gestion des accès à la base de données 10.

Cette unité centrale de gestion 20 est également constituée par un micro-ordinateur et se distingue des postes de consultation par le niveau d'accès aux documents. Ainsi, elle permet, par exemple, procéder à des modifications, mises à jour ou suppressions de documents contenus de la base de données 10.

Comme on le conçoit, les postes de consultation 14, 16 et 18 sont accessibles par l'ensemble des membres du personnel de l'entreprise. Ils permettent, moyennant l'utilisation d'un logiciel de navigation approprié d'accéder et de naviguer dans celui-ci et en particulier, d'accéder aux documents de la base de données 10.

Pour la gestion des accès aux informations contenues dans la base de données 10, l'unité centrale de gestion 20 procède à l'établissement d'une hiérarchie des utilisateurs, à partir de l'organigramme de l'entreprise et affecte à chaque utilisateur de cette hiérarchie une liste de documents ou une liste d'adresses de documents de la base de données 10 qui leurs sont accessibles.

Pour ce faire, en référence à la figure 2, l'unité centrale de gestion 20 dispose de bases de données 22 regroupant l'ensemble des données ou documents accessibles par les utilisateurs, et d'une base d'utilisateurs 24 regroupant l'ensemble des membres du personnel de l'entreprise.

La base d'utilisateur 24 est commune pour toutes les applications susceptibles d'être envisagées.

Les bases de données 22 sont quant à elles spécifiques pour les applications logicielles lancées par un utilisateur pour consulter la base 10.

Dans l'exemple représenté sur la figure 2, l'utilisateur a la possibilité de lancer deux applications logicielles différentes A1 et A2.

A partir des bases de données 22 et 24, on procède à l'établissement d'une hiérarchie des utilisateurs en utilisant l'organigramme hiérarchique de l'entreprise et on affecte à chaque membre d'un service ou d'une équipe de chaque branche de la hiérarchie une liste de documents, extraits de la base de données 22, ou une liste d'adresses de documents, qui leurs sont accessibles.

On établit ainsi un arbre hiérarchique 26 dont chaque élément est lié à un ensemble d'utilisateurs extraits de la base d'utilisateurs 24 et à un ensemble de documents extraits de la base de données 22.

Comme on le voit également sur la figure 2, on utilise également un tableau de droits 28 pour attribuer, à chaque membre de la hiérarchie un niveau d'accès aux documents en vue, par exemple, de n'autoriser, à certains utilisateurs, que la lecture des documents et de permettre, à d'autres utilisateurs, de procéder à une modification voire à une suppression de tout ou partie des documents qui leurs sont accessibles. Tel est le cas d'un opérateur procédant à la gestion des accès aux informations en utilisant l'unité centrale 20.

On notera que la base de données 22 contient un ensemble d'informations inorganisées, constituées typiquement par un ensemble de documents.

Cet ensemble de documents peut comporter en annexe un code de référence, un libellé descriptif du document, un commentaire, une date de création et une date de modification, l'adresse d'un document lié, un code spécifiant si le document est périmé ou est introuvable, ainsi que d'autres éléments spécifiques à l'application et facilitant la recherche.

Chaque fois qu'un document est modifié, la date de modification est actualisée.

Comme cela sera mentionné par la suite, cette actualisation permet d'indiquer aux utilisateurs le ou les documents qui ont subis une modification.

Par ailleurs, une donnée d'un document peut être associée à un lien pointant vers un ou plusieurs autres documents secondaires. Dans ce cas, la donnée est transformée en un lien dans le navigateur et son activation affiche sur l'écran du poste utilisateur le contenu du document.

A partir de la base de données 22 et de la base d'utilisateur 24, il est procédé à une structuration des informations accessibles aux utilisateurs.

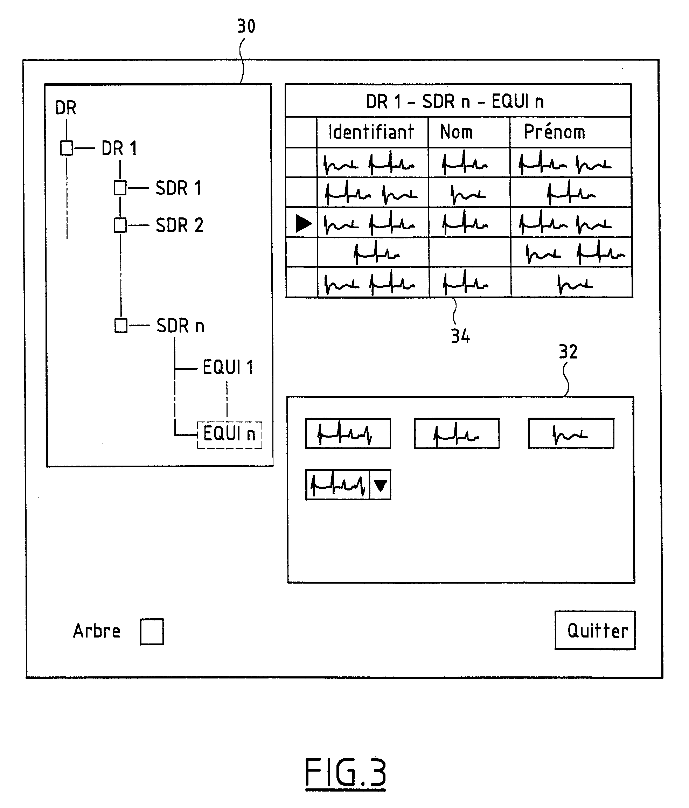

Pour ce faire, en référence à la figure 3, à partir de l'organigramme général de l'entreprise présenté sur une fenêtre 30 de l'unité centrale 20 et dont une partie est visible sur la partie de gauche de la figure 3, on affecte à chaque branche de cet organigramme la liste des membres du personnel de l'entreprise qui appartiennent à cette branche, au moyen d'une fenêtre de saisie 32. L'ensemble des membres d'une branche sélectionnée est présenté sur une fenêtre 34 de l'écran de l'unité centrale de gestion 20.

Dans l'exemple représenté, une direction régionale DR1 d'une entreprise est subdivisée en un ensemble de sous directions SDR₁, ... SDRₙ, dont, l'une sélectionnée, est dotée d'un certain nombre de services ou équipes EQU1,..., EQUn. Pour procéder à la hiérarchisation des utilisateurs du service d'accès conforme à l'invention, pour chaque service de l'ensemble des sous directions et directions de l'organigramme, c'est-à-dire pour chaque branche de ce dernier, on établit une liste de membres du personnel, visible sur la fenêtre 34, autorisés à accéder à des documents.

Ainsi, dans l'exemple considéré, le service EQU1n comporte cinq membres ou agents qui sont susceptibles d'accéder à des documents.

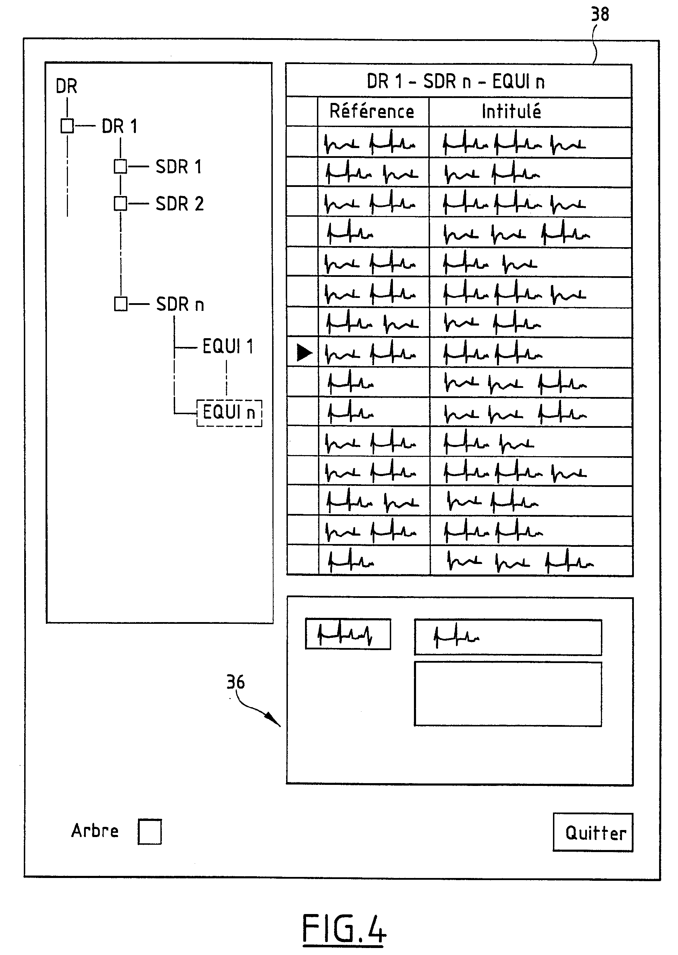

En se référant maintenant à la figure 4, on affecte ensuite, à chaque service, c'est à dire à chaque élément de l'organigramme de l'entreprise, une liste de documents consultables.

On utilise à cet effet une fenêtre de saisie 36. L'ensemble des documents consultables saisis est présenté sur une fenêtre 38 de l'unité centrale de gestion 20.

Dans l'exemple de réalisation considéré, les cinq membres du service EQUIn ont la possibilité de consulter l'ensemble des documents qui ont été affectés au service correspondant.

On va maintenant décrire en référence aux figures 2 à 5 le mode de fonctionnement du système de gestion d'accès qui vient d'être décrit.

Dans l'exemple de réalisation envisagé, l'accès aux bases de données peut s'effectuer en lançant l'une ou l'autre de deux applications logicielles.

On accède à ces applications par l'intermédiaire d'un logiciel de navigation, de type classique.

La présentation des différentes applications proposées aux utilisateurs peut s'effectuer sous la forme d'un menu, par exemple sous la forme d'une page web standard.

Après sélection de l'une ou l'autre des applications, l'utilisateur sélectionne la branche de la hiérarchie à laquelle il appartient, ou entre un identifiant représentant son identité.

Dans le cas où l'identité de l'utilisateur correspond à celle de l'un des utilisateurs stockés dans la base d'utilisateurs 24, le centre serveur du réseau informatique 12 provoque simplement l'affichage sur une fenêtre 40 de l'ensemble des documents auxquels l'utilisateur a accès, éventuellement regroupés pour thèmes.

On notera que cette procédure est identique pour l'unité centrale de gestion 20.

Toutefois dans ce cas, une consultation de la base de données 10 provoque l'affichage, sur l'écran de l'unité centrale 20 de l'ensemble des documents de la hiérarchie, et ce, avec un niveau d'accès accru, c'est à dire qu'une modification et une suppression d'un ou de plusieurs documents sont autorisées.

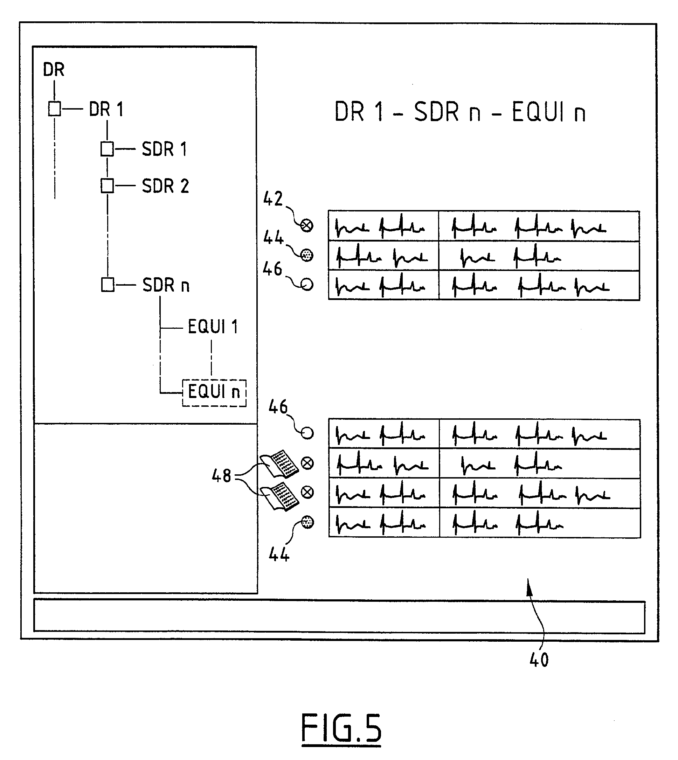

Comme cela est représenté sur la partie droite de l'écran visible sur la figure 5, un icône 42, 44 et 46 est associé à chaque document pour indiquer si ce document a déjà été lu, si il a été modifié depuis la dernière lecture, et s'il n'a jamais été lu.

Par ailleurs, un icône additionnel 48 permet d'indiquer la liste des documents cités dans un document. Enfin, et comme cela a été mentionné précédemment, chaque document peut être associé à un lien hypertexte pointant vers une liste secondaire de documents.

Pour consulter un document, il convient simplement de le sélectionner, on obtient directement, en réponse, son affichage sur l'écran du poste de consultation. On conçoit donc qu'une recherche de document est grandement simplifiée.

En outre, la classification hiérarchisée des documents augmente considérablement leur confidentialité dans la mesure où les utilisateurs n'ont accès qu'aux seuls documents auxquels ils sont autorisés à accéder.

## Revendications

1. Procédé de gestion d'accès à des informations contenues dans au moins une base de données (22) par des utilisateurs appartenant à une liste contenue dans une base d'utilisateurs (24), caractérisé en ce que l'on établit une hiérarchie des utilisateurs, l'on affecte à chacun d'entre eux une liste de documents ou une liste d'adresses de documents de la base de données qui leur sont accessibles et, pour chaque utilisateur, on n'autorise l'accès qu'aux seuls documents qui leur sont affectés, et en ce qu'à une partie au moins des documents ou des adresses de documents affectés aux utilisateurs, on associe des liens pointant vers une liste secondaire d'au moins un document.

2. Procédé selon la revendication 1, caractérisé en ce que l'on attribue en outre à chaque utilisateur de la hiérarchie un niveau d'accès au document.

3. Procédé selon la revendication 1 ou 2, caractérisé en ce qu'à une partie au moins des documents ou des adresses de documents affectés aux utilisateurs, on associe une liste de documents ou d'adresses de documents qui y sont cités.

4. Procédé selon l'une quelconque des revendications 1 à 3, caractérisé en ce qu'en réponse à une requête d'un utilisateur, on procède à une comparaison entre l'identité de l'utilisateur et celle des utilisateurs de la base d'utilisateurs et, en cas de coïncidence entre l'identité de l'utilisateur qui a formulé la requête et celle d'un utilisateur de la base, on présente à cet utilisateur la liste des documents ou des adresses de documents qui lui sont accessibles.

5. Procédé selon la revendication 4, caractérisé en ce que l'on associe à chaque document un indicateur (42, 44, 46) représentant la nature d'une action préalablement réalisée sur le document.

6. Système de gestion d'accès à des informations contenues dans au moins une base de données (20) par des utilisateurs appartenant à une liste contenue dans une base d'utilisateurs (24), caractérisé en ce qu'il comporte une unité centrale (20) de gestion d'accès adaptée pour établir une hiérarchie des utilisateurs et pour affecter, à chaque utilisateur, une liste de documents ou une liste d'adresses de documents de la base de données qui leurs sont accessibles, et un ensemble de postes de consultation (14, 16, 18) utilisables par les utilisateurs pour accéder au document dont l'accès est autorisé par l'unité centrale de gestion, et en ce que l'unité centrale (20) de gestion d'accès est en outre adaptée pour associer, à une partie au moins des documents ou des adresses de documents affectés aux utilisateurs, des liens pointant vers une liste secondaire d'au moins un document.
